**Europäisches Patentamt**

**European Patent Office**

**Office européen des brevets**

(19)

(11) Veröffentlichungsnummer: **0 096 175**
**B1**

# EUROPÄISCHE PATENTSCHRIFT

(12)

(45) Veröffentlichungstag der Patentschrift:.
**20.11.86**

(21) Anmeldenummer: **83102658.8**

(22) Anmeldetag: **17.03.83**

(51) Int. Cl.⁴: **F 16 L 41/00**

(54) **Schweissstellenfreie Verbindung.**

(30) Priorität: **03.06.82 DE 3220945**

(43) Veröffentlichungstag der Anmeldung:
**21.12.83 Patentblatt 83/51**

(45) Bekanntmachung des Hinweises auf die Patenterteilung:
**20.11.86 Patentblatt 86/47**

(84) Benannte Vertragsstaaten:
**AT BE CH DE FR GB IT LI LU NL SE**

(56) Entgegenhaltungen:
**CH - A - 529 963**
**DE - C - 69 935**
**DE - C - 2 857 662**
**FR - A - 1 596 253**

(73) Patentinhaber: **Josef Gartner & Co., Postfach 20/40,
D-8883 Gundelfingen (DE)**

(72) Erfinder: **Gartner, Fritz, Dr., Gartnerstrasse 24,
D-8883 Gundelfingen (DE)**

(74) Vertreter: **Patentanwälte Müller-Boré, Deufel, Schön,
Hertel, Lewald, Otto, Postfach 26 02 47 Isartorplatz 6,
D-8000 München 26 (DE)**

ACTORUM AG

## Beschreibung

Die Erfindung betrifft eine Vorrichtung zur schweissstellenfreien Verbindung von im wesentlichen senkrecht aufeinanderstossenden Rohren des Rohrleitungssystems einer Temperierungseinrichtung, wobei an einem durchgehenden Rohr zwei miteinander fluchtende Rohre aufstossen, wobei in dem durchgehenden Rohr eine Durchgangsbohrung ausgebildet ist, welche mit den aufstossenden Rohren fluchtet, und wobei den einander zugewandten Enden jedes der aufstossenden Rohre eine gemeinsame Buchse eingesetzt ist, welche das durchgehende Rohr durchsetzt und in einem der Rohre eingeschraubt ist.

Ein derartiges Rohrleitungssystem ist beispielsweise an den Aussenwänden eines Gebäudes im Bereich der Fassadenverkleidung angeordnet. Dabei werden die Pfosten und Riegel bildenden Abschnitte des Rohrleitungssystems durch Sonneneinstrahlung aufgeheizt, wonach diese für die Aufheizung von Räumen eingesetzt werden kann. Das Rohrleitungssystem bildet dabei ein Vor- und ein Rücklaufsystem für ein die Wärme zuführendes Transportmittel und ein Vor- und ein Rücklaufsystem für ein die Wärme abführendes Transportmittel. Problematisch ist die Erstellung eines derartigen Rohrleitungssystems, da die Verbindungsstellen in strömungstechnischer Hinsicht gewisse Bedingungen erfüllen müssen.

Durch die CH-A 529 963 ist eine gattungsgemässe Vorrichtung bekannt, bei welcher das Abdichten der aufstossenden Rohre an dem durchgehenden Rohr über Dichtungsringe erfolgt, die zwischen der Aussenseite des durchgehenden Rohres und der Stirnseite jeweils eines aufstossenden Rohres eingeklemmt sind. Beim Aufschrauben der aufstossenden Rohre kann sehr leicht der Dichtungsring verletzt werden, wodurch Dichtprobleme zwischen den miteinander zu verbindenden Teilen auftreten können.

Der Erfindung liegt die Aufgabe zugrunde, eine gattungsgemäse Vorrichtung derart auszubilden, dass bei der Montage eine Verletzung der Dichtringe verhindert wird.

Diese Aufgabe wird erfindungsgemäss dadurch gelöst, dass im anderen der aufstossenden Rohre eine mit Aussengewinde versehene Hilfsbuchse eingeschraubt ist, die in engem Sitz auf einem Teil eines Endabschnitts der Buchse angeordnet ist, dass der Endabschnitt der Buchse, welcher über die Hilfsbuchse hinausgeht, teilweise mit einem Aussengewinde versehen ist und dass darauf eine ringförmige Mutter mit Innengewinde eingeschraubt ist, welche die Buchsen gegen die Hilfsbuchse verspannt.

Bei der Montage der erfindungsgemässen Vorrichtung wird die Buchse mit einem Ende in eines der aufstossenden Rohre eingeschraubt. In dem anderen der aufstossenden Rohre ist die Hilfsbuchse eingeschraubt, so dass an der Stirnseite des mit der Hilfsbuchse versehenen, aufstossenden Rohres ein Dichtring angeordnet werden kann, der beim Zusammenziehen der Rohre lediglich angepresst wird. Eine Verdrehung des Dichtringes während der Montage wird dabei vermieden. Zum Einschrauben der ringförmigen Mutter kann diese an ihrem Ende mit einem Innensechskant ausgebildet sein. Zum Durchlass der Flüssigkeit in dem durchgehenden Rohr ist vorzugsweise der Aussendurchmesser des mittleren Rohrabschnitts der Buchse kleiner als der Innendurchmesser des durchgehenden Rohres.

Zur Aufnahme eines Dichtungs-O-Ringes können bevorzugterweise die Enden der aufstossenden Rohre mit ringförmigen Ausnehmungen versehen sein, in die der O-Ring eingelegt werden kann.

Wegen der gleichartigen Beschaffenheit der sich in dem Rohrleitungssystem kreuzenden Flüssigkeitsströme ist es nicht problematisch, wenn die Verbindung der Rohre innerhalb des Kreuzungspunktes nicht hundertprozentig dicht ist. Erforderlich ist nur, dass eine absolute Dichtigkeit nach aussen gewährleistet ist.

Die Erfindung wird im folgenden anhand mehrerer Ausführungsbeispiele unter Bezugnahme auf die Zeichnung näher erläutert. Es zeigen

Fig. 1 eine Ausführungsform einer Rohrkreuzung im Schnitt,
Fig. 2 die Verbindungsbuchse von Fig. 1 und
Fig. 3 eine Ansicht gemäss Pfeil III von Fig. 1.

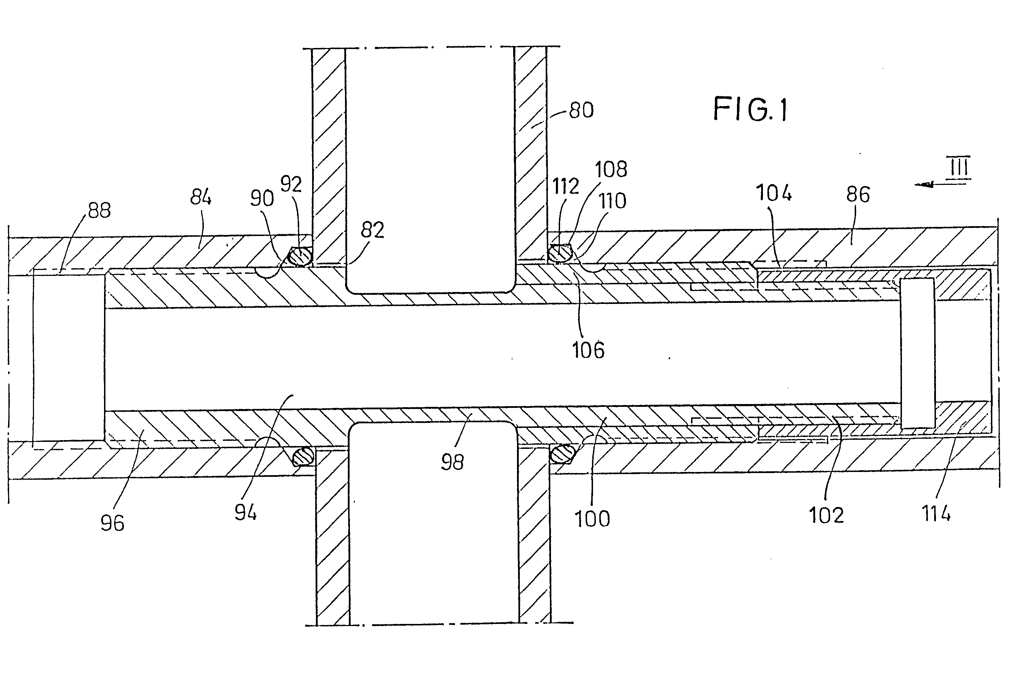

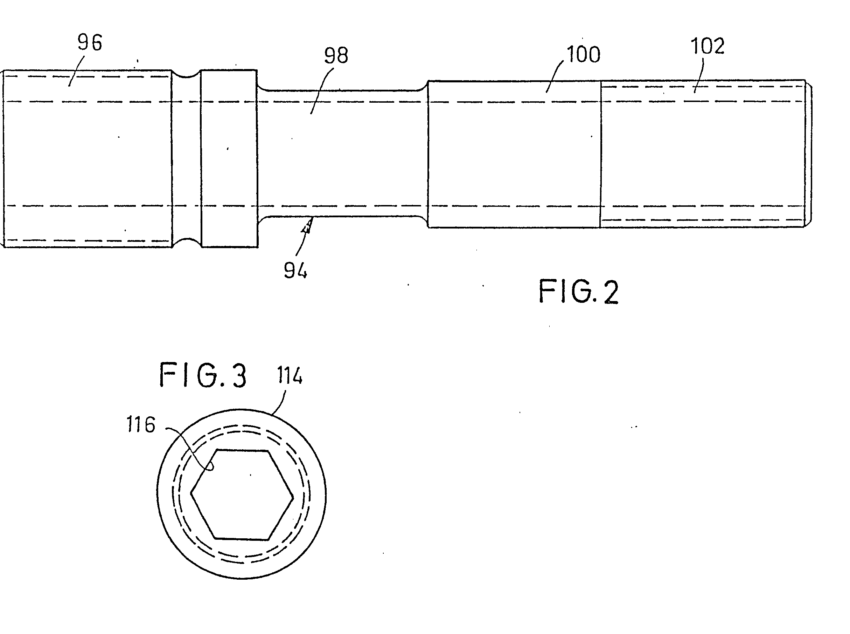

Fig. 1 zeigt ein durchgehendes Rohr 80, das mit einer Durchgangsbohrung 82 ausgebildet ist. Mit diesem Rohr 80 sind ein Rohr 84 und ein Rohr 86 verbunden. Das Rohr 84 ist an seinem Ende mit einem Innengewinde 88 ausgebildet und weist am äusseren Ende eine Ausnehmung 90 auf, in die ein O-Ring 92 eingelegt ist. In das Rohr 84 ist eine lange Buchse 94 eingeschraubt, deren Gestalt insbesondere aus Fig. 2 zu ersehen ist. Die Buchse 94 besteht aus vier Abschnitten, nämlich einem Endabschnitt 96 zum Einschrauben in das Rohr 84, einem mittleren Rohrabschnitt 89, der sich durch das durchgehende Rohr 80 erstreckt, einem glatten Abschnitt 100, der im äusseren Endbereich des aufstossenden Rohres 86 verläuft, und einem mit einem Aussengewinde versehenen Bereich 102, der sich an diesen glatten Bereich anschliesst.

Das aufstossende Rohr 86 ist an seinem Ende mit einem Innengewinde 104 ausgebildet, in das eine Hilfsbuchse 106 eingeschraubt ist. Diese Hilfsbuchse, die eine glatte Innenfläche aufweist, steht über das Rohr 86 hervor und bildet mit einer Ausnehmung 108 im Ende des Rohres 86 eine Ringnut 110, in die eine O-Ring 112 zur Abdichtung zwischen dem Rohr 86 und dem Rohr 80 eingelegt ist. Eine auf das Aussengewinde 102 des äusseren Abschnitts der Buchse 94 aufschraubbare Ringmutter 114 bewirkt den Zusammenhang der Buchsenteile mit den aufstossenden Rohren und dem durchgehenden Rohr.

Zum Zusammenbau der Rohre 84 und 86 mit dem Rohr 80 wird die Buchse 94 in das Rohr 84 eingeschraubt. Anschliessend wird die Buchse durch die Durchgangsbohrung 82 in dem Rohr 80 hindurchgesteckt. Danach wird das mit der Hilfsbuchse 106 versehene Ende des Rohres 86 über die Bereiche 100 und 102 der Buchse 94 gesteckt, wobei der O-Ring 112 vorher in die Nut 110 eingelegt worden ist. Von der Seite des Rohres 86 wird jetzt die Ringmutter 114 eingeführt, die mit einem entsprechend lang ausgebildeten Werkzeug auf das Aussengewinde des Bereichs 102 der Buchse 94 aufgeschraubt wird. Die Ringmutter 114 ist dazu, wie insbesondere aus Fig. 3 zu ersehen ist, mit einem Innensechskant 116 ausgebildet.

## Patentansprüche

1. Vorrichtung zur schweissstellenfreien Verbindung von im wesentlichen senkrecht aufeinanderstossenden Rohren (80; 84, 86) des Rohrleitungssystems einer Temperierungseinrichtung, wobei an einem durchgehenden Rohr (80) zwei miteinander fluchtende Rohre (84, 86) aufstossen, wobei in dem durchgehenden Rohr (80) eine Durchgangsbohrung (82) ausgebildet ist, welche mit den aufstossenden Rohren (84, 86) fluchtet, und wobei in den einander zugewandten Enden jedes der aufstossenden Rohre (84, 86) eine gemeinsame Buchse (94) eingesetzt ist, welche das durchgehende Rohr (80) durchsetzt und in einem der Rohre (84, 86) eingeschraubt ist, dadurch gekennzeichnet, dass im anderen der aufstossenden Rohre (84, 86) eine mit Aussengewinde versehene Hilfsbuchse (106) eingeschraubt ist, die in engem Sitz auf einem Teil (100) eines Endabschnitts der Buchse (94) angeordnet ist, dass der Endabschnitt (102) der Buchse (94), welcher über die Hilfsbuchse (106) hinausgeht, teilweise mit einem Aussengewinde versehen ist und dass darauf eine ringförmige Mutter (114) mit Innengewinde aufgeschraubt ist, welche die Buchse (94) gegen die Hilfsbuchse (106) verspannt.

2. Vorrichtung nach Anspruch 1, dadurch gekennzeichnet, dass die Mutter (114) mit einem Innensechskant (116) ausgebildet ist.

3. Vorrichtung nach Anspruch 1 oder 2, dadurch gekennzeichnet, dass der Aussendurchmesser des Rohrabschnitts (98) kleiner ist als der Innendurchmesser des durchgehenden Rohres (80).

4. Vorrichtung nach einem der Ansprüche 1 bis 3, dadurch gekennzeichnet, dass die Wandung des Rohrabschnitts (98) mit Durchgangsbohrungen ausgebildet ist.

5. Vorrichtung nach einem der Ansprüche 1 bis 4, dadurch gekennzeichnet, dass die Enden der aufstossenden Rohre (84, 86) mit Ringausnehmungen (90, 110) ausgebildet sind zur Aufnahme von O-Ringen (92, 112).

## Claims

1. A device for joining together, without welding, of pipes (80, 84, 86) butting together substantially at right angles in a pipe line system of temperature control equipment installation, in which two pipes (84, 86) in line with each other butt against a through pipe (80), there being a through bore (82) formed in the through pipe (80) and which is in line with the pipes (84, 86) butting against it, and in the adjacent ends of the butting pipes (84, 86) a common bush (94) is inserted, passing through the through pipe (80) and screwed into one of the pipes (84, 86), characterised in that an auxiliary bush (106) provided with an external screwthread is screwed into the other butting pipe (84, 86) and is a close fit on a portion (100) of the end of the bush (94), that an end portion (102) of the bush (94) which protrudes beyond the auxiliary bush (106) is provided with an external screwthread for part of its lenght, and that an annular nut (114) provided with an internal screwthread is screwed on to this part and clamps the bush (94) against the auxiliary bush (106).

2. A device in accordance with claim 1, characterised in that the nut (114) is formed with an internal hexagon (116).

3. A device in accordance with claim 1 or 2, characterised in that the external diameter of a tubular portion (98) is less than the internal diameter of the through pipe (80).

4. A device in accordance with one of claims 1 to 3, characterised in that the wall of the tubular portion (98) is formed with through bores.

5. A device in accordance with one of claims 1 to 4, characterised in that the ends of the butting pipes (84, 86) are formed with annular recesses (90, 110) to accept O-rings (92, 112).

## Revendications

1. Dispositif pour raccorder sans soudure des tubes aboutés sensiblement perpendiculairement (80; 84; 86) du système de conduites tubulaires d'une installation d'équilibrage de températures, dans lequel deux tubes (84, 86) situés dans le prolongement l'un de l'autre sont aboutés à un tube (80) traversant, un trou de passage (82) qui est situé dans le prolongement des tubes (84, 86) aboutés étant ménagé dans le tube (80) traversant tandis que, dans les extrémités se faisant face de chacun des tubes (84, 86) aboutés, est introduite une douille (94) commune qui traverse le tube (80) continu et est vissée dans l'un des tubes (84, 86), caractérisé en ce que, dans l'autre des tubes aboutés (86), est vissée une douille auxiliaire (106) pourvue d'un filetage extérieur qui est disposée en ajustement étroit sur une partie (100) d'une section terminale de la douille (94), que la section terminale (102) de la douille (94) qui fait saillie au-delà de la douille auxiliaire (106) est pourvue en partie d'un filetage extérieur et qu'un écrou (114) annulaire à filet intérieur est vissé sur celui-ci, cet écrou serrant la douille (94) contre la douille auxiliaire (106).

2. Dispositif selon la revendication 1, caractérisé en ce que l'écrou (114) est un écrou à six pans creux (116).

3. Dispositif selon la revendication 1 ou 2, caractérisé en ce que le diamètre extérieur du segment tubulaire (98) est plus petit que le diamètre intérieur du tube continu (80).

4. Dispositif selon une quelconque des revendications 1 à 3, caractérisé en ce que la paroi du segment tubulaire (98) est dotée de trous de passage.

5. Dispositif selon une quelconque des revendications 1 à 4, caractérisé en ce que les extrémités des tubes (84, 86) aboutés sont pourvues d'évidements annulaires (90, 110) pour recevoir des joints toriques d'étanchéité.

FIG.1

96  98  100  102

94

FIG.2

FIG.3  114

116

0 096 175